(19) Europäisches Patentamt
European Patent Office
Office européen des brevets

(11) EP 1 026 849 A2

# (12) EUROPÄISCHE PATENTANMELDUNG

(43) Veröffentlichungstag: **09.08.2000 Patentblatt 2000/32**

(51) Int. Cl.[7]: **H04J 13/00**, H04J 14/02

(21) Anmeldenummer: **00440029.7**

(22) Anmeldetag: **31.01.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.02.1999 DE 19904940**

(71) Anmelder: **ALCATEL**
**75008 Paris (FR)**

(72) Erfinder: **Pfeiffer, Thomas, Dr.**
**70569 Stuttgart (DE)**

(74) Vertreter:
**Rausch, Gabriele, Dr. et al**
**Alcatel**
**Intellectual Property Department, Stuttgart**
**Postfach 30 09 29**
**70449 Stuttgart (DE)**

## (54) Optisches Übertragungssystem sowie Sender und Empfänger

(57) Es wird ein optisches Übertragungssystem mit Sendern und Empfängern vorgeschlagen, wobei eine schmalbandige CDMA-Übertragung mit einer WDM-Übertragung kombiniert wird und eine Punkt-zu-Punkt-Verbindung für bis zu 256 Kanäle geschaffen wird.

Fig.1
1
DC
8
9
AM, FM, PM
7
f mod
10
LD
6
4
5
2
11
17
FSR=f mod
16
12
13
14
15
3

EP 1 026 849 A2

## Beschreibung

Die Erfindung geht aus von einem optischen Übertragungssystem sowie von Sendern und Empfängern für ein optisches Übertragungssystem zur Übertragung von frequenzcodierten Signalen nach der Gattung der unabhängigen Ansprüche.

Aus der noch nicht veröffentlichten deutschen Anmeldung 197 48 756.4 ist ein Empfänger für spektralcodierte optische Signale bekannt. Ein Übertragungsnetz für codierte optische Signale besteht aus optischen Übertragungsleitungen, optischen Splittern sowie ggf. optischen Verstärkern und dient zur Übertragung codierter gemultiplexter optischer Signale. Jeder Sender enthält einen Codierer, in dem die zu übertragenden Signale vor ihrer Aussendung ins optische Übertragungsnetz codiert werden. Die Codierung erfolgt auf optischem Wege, z.B. durch Frequenzcodierung mit einem optischen Filter. Jeder Empfänger der die Daten eines speziellen Senders empfangen will, muß einen Decodierer enthalten, der auf den Codierer dieses bestimmten Senders abgestimmt ist. Im einfachsten Fall sind die Frequenzbereiche, die für optische Signale durchlässig und die Frequenzbereiche, die für optische Signale gesperrt sind, beim Codierer und beim Decodierer gleich. Die bekannten CDMA (Coded Division Multiple Access) -Verfahren eignen sich vorallem für die Übertragung von nicht all zu hohen Bitraten (>155 MBit/s). Für einen Einsatz als Multipunkt-zu-Multipunkt-Netz, wie es beispielsweise ein LAN darstellt, ist das CDMA-Verfahren geeignet. Dabei können, wenn man die Auflösung in den einzelnen Empfängern betrachtet, bis ca. 32 Kanäle parallel übertragen werden.

Aufgabe der Erfindung ist es, ein einfaches Multipunkt-zu-Multipunkt-Verbindungssystem vorzuschlagen, das eine große Anzahl an Kanälen bereitstellt, und mit einfachen Komponenten zu realisieren ist.

Das erfindungsgemäße optische Ubertragungssystem mit den kennzeichnenden Merkmalen des unabhängigen Anspruchs hat den Vorteil eine schmalbandige CDMA-Übertragung mit einer WDM (Wavelength Division Multiplex) -Übertragung zu verbinden und so bis zu 256 Kanäle Multipunkt-zu-Multipunkt zur Verfügung zu stellen. Vorteilhafterweise kann ein solches kombiniertes Verfahren mit einfach aufgebauten Sender realisiert werden, wobei keine besonderen Anforderungen an die Spezifikation z.B. die Stabilität der Wellenlänge, des Sendelasers vorliegt. Da keine besonderen Anforderungen an die Sendemodule gestellt werden, sind einfache und kostengünstige Realsierungen möglich. Vorteilhafterweise wird ein optisches Übertragungssystem für frequenzcodierte Signale etabliert, indem die Codierung durch Modulation des Injektionsstroms der Laserdiode erzeugt wird und durch spezielle Modulation mit dem Datensignal eine einfache Detektion im Empfänger möglich wird. Durch die spezielle Modulation im Sender und deren Detektion im Empfänger ist ein sehr einfacher Aufbau des Empfängers möglich. Vorallem wird ein Differenzverstärker vermieden, der aufwendig zu realisieren und bezüglich seiner Abstimmung empfindlich ist. Die für das optische Übertragungssystem verwendeten Sender und Empfänger sind sehr einfach aufgebaut.

Ein Ausführungsbeispiel der Erfindung ist in den Zeichnungen dargestellt und in der nachfolgenden Beschreibung näher erläutert.

Es zeigt

Fig. 1 ein Übertragungssystem mit Sender und Empfänger

Fig. 2 ein CDMA-Verfahren mit Fenstertechnik und

Fig. 3 ein WDM-Verfahren kombiniert mit CDMA.

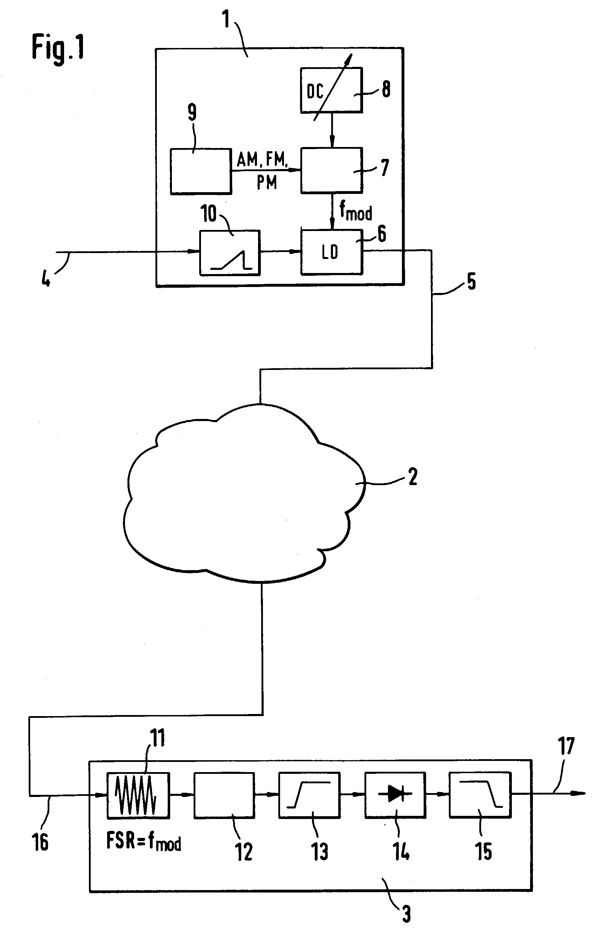

Fig. 1 zeigt den Aufbau eines beispielhaften Systems bestehend aus einem Sender 1, einem Übertragungsnetz 2 und einem Empfänger 3. Im Empfänger 1 ist eine optische Quelle 6 sowohl mit einem Dateneingang 4 verbunden als auch mit einem Oszillator 7. Der Dateneingang 4 liegt nicht direkt an der optischen Quelle 6 an, sondern über einen Rampengenerator 10. Der Oszillator 7 weist einen Eingang zu einem Rauschgenerator 9 und einen Eingang zu einer Stromsteuerung 8 auf. Zur Erzeugung der für die CDMA Übertragung notwendigen Kammstruktur des optischen Signals wird der Injektionsstrom des Laser direkt moduliert. Ein solches Verfahren ist bereits in der noch nicht veröffentlichten DE 198 22 616.0 beschrieben. Über die Stromsteuerung 8, die die Modulationsfrequenz vorgibt, und den Oszillator 7 wird der Injektionsstrom des Lasers 6 mit einer periodischen Funktion angesteuert. Durch eine solche beispielsweise sinusförmige Modulation des Injektionsstroms mit der Frequenz $f_{mod}$ wird ein optisches Kammspektrum erzeugt, das aus der Überlagerung von amplituden- und frequenzmodulierten Komponenten besteht. Die Breite des Kammspektrums ergibt sich aus der Funktion $\Delta f = 2 \times m\, f_{mod}$ (m ist dabei der Modulationsindex, der in der Großienordnung von 100 liegt). Theoretische Betrachtungen sowie Messungen ergeben, daß die Systemkapazität erhöht wird, wenn die einzelnen Linien des optischen Kammes verschmiert sind. Optimal ist eine Linienbreite von $f_{mod}$ /F mit der Finesse F von 10 bis 30. Um die Linienverbreiterung zu erreichen, wird das Modulationssignal des Oszillators über den Rauschgenerator 9 verschmiert. Die Modulation kann dabei eine Amplituden-, eine Frequenz- oder eine Phasenmodulation sein. Insgesamt entsteht im Sender ein optisches Spektrum, das einem Spektrum entspricht, das eine Leuchtdiode mit anschließender Filterung durch ein Fabry-Perot-Filter erzeugt. Das Datensignal, das am Eingang 4 des Empfängers anliegt wird ebenfalls direkt auf den Injektionsstrom des Lasers aufmoduliert. Dabei erzeugt der Rampengenerator 10 einen Injektionsstrom im Takt der Daten, was zu einer geringfügigen Frequenzmodulation und damit zu einer Verschiebung der Position des Frequenzkammes im Spektrum führt. Der Frequenzhub ist wesentlich kleiner als die gesamte spektrale Bandbreite des Kamms. Dabei unterscheiden sich die Datenzustände "0" und "1" durch die Größe des Hubs bzw. durch Ein-und Ausschalten eines Hubs für die Datenbits 1 und 0. Die so erzeugten Frequenzkämme, die ihre Position im Takt der Daten ändern, werden über den optischen Ausgang 5 in das Übertragungsnetz 2 eingespeist. Am Ort des Empfängers werden die optischen Daten über den optischen Eingangskanal 16 empfangen. Im Empfänger 3 ist ein optisches Filter 11 mit einer Fotodiode 12 verbunden. Der Ausgang der Fotodiode liegt am Eingang eines elektrischen Filters 13 an, das wiederum mit einem Mikrowellendetektor 14 verbunden ist. Am Ausgang des Mikrowellendetektors 14 ist ein elektrisches Tiefpaßfilter 15 angeschlossen, dessen Ausgang 17 elektrische Daten liefert.

Es ist auch möglich und für die Auswertung günstig, zwischen der Fotodiode 12 und dem elektrischen Filter 13 einen HF-Verstärker einzubauen.

Das optische Filter 11 besitzt einen definierten freien Spektralbereich FSR, der der Modulationsfrequenz $f_{mod}$ eines Senders im Übertragungssystem entspricht. Das optische Filter 11 kann beispielsweise ein Mach-Zehnder oder ein Michelson-Filter sein. Diese optischen Filter lassen nur einen Frequenzkamm durch, der ihrem freien Spektralbereich entspricht. Durch die Modulation mit dem Datensignal verschiebt sich der optische Kamm geringfügig, so daß an der Fotodiode für jedes Bit ein Fotostrom mit der Frequenz $B \bullet f_{data}/f_{mod}$ entsteht. B stellt dabei die Daten-Bitrate dar. Die anderen Sender im Übertragungssystem erzeugen keinen hochfrequent modulierten Fotostrom, da ihr jeweiliger Frequenzkamm von dem des optischen Filters abweicht. Lediglich eine geringe Amplitudenmodulation mit der Datenrate wird detektiert. Diese Restmodulation wird über das elektrische Filter 13, das als Hochpaß- oder Bandpaß-Filter ausgelegt sein kann, entfernt. Die untere Grenzfrequenz dieses elektrischen Filters ist dabei größer als die Frequenz der Daten-Bitrate. Als Ergebnis erhält man eine Hochfrequenzmodulation im Bereich $B \bullet f_{data}/f_{mod}$, die mit einem HF-Detektor Hüllkurven demoduliert wird. Anschließend wird das Signal des Mikrowellendetektors 14 mit einem Tiefpaß geglättet. Der Tiefpaß weist dabei beispielsweise eine Grenzfrequenz von $0{,}7 \bullet B$ auf. In dieser beispielshaften Ausführungsform wird das Datensignal mit einer Rampenfunktion auf die Kammfrequenz aufmoduliert, was zu einer einfachen Detektion des resultierenden Hochfrequenzsignales führt. Es sind allerdings auch andere Modulationsarten zur Aufprägung der Daten auf den Injektionsstrom des Lasers denkbar, z.B. Sinusformen oder Dreiecksfunktionen. In solchen Fällen wird das elektrische Spektrum komplexer wobei die Auswertung angepast wird. Die Vorteile eines solchen Übertragungssystems bestehen in der optischen Quelle mit hoher Leistung, in der Möglichkeit, einen optischen Kanal durch Wahl der Modulationsfrequenz des Lasers einzustellen, das optische Spektrum durch eine Modulationswallenform zu definieren, ein einfacher optischer Empfänger ohne aktive Kontrolle des freien Spektralbereichs des Filters . sowie eine einfache optische Detektion ohne Differenzverstärker. Die Laserdiode unterliegt keinen hohen Anforderungen. Die zentrale Wellenlänge ist nicht von großer Bedeutung, da ein Frequenzkamm erzeugt wird. Als beispielhafte Ausführung eines Übertragungssystem wie oben beschrieben, sind in der folgenden Liste Daten angegeben:

| | |
|---|---|
| N | = 16 (Anzahl der Sender/Empfänger) |
| B | = 20 Mbit/s |
| $f_{mod}$ | = 160 MHz |
| $\Delta f$ | =40 GHz |
| $f_{data}$ | = 800 MHz für"1"; 0 MHz für "0" |

Das vorschlagene Übertragungssystem eignet sich vorallem für niederbitratige Anwendungen mit bis zu 20 Mbit/s pro Sender. Besonders einfach ist der Einsatz in einem Multipunkt-zu-Multipunkt-Netz z.B. einem LAN, da hier ein TDMA-Ansatz unmöglich und ein WDMA-Ansatz zu teuer wäre. Neben den geringen Kosten ist vor allem das problemlose Ändern des Kommunikations-Kanals zwischen zwei Teilnehmern von Vorteil. Der Sender muß seine Modulationsfrequenz auf den freien Spektralbereich des festen optischen Filters im gewünschten Empfänger abstimmen. Dies ist mit dem Oszillator 7 auf einfache Art und Weise möglich. Um die spektrale Bandbreite des Senders zu vergrößern, ist es weiterhin möglich, einen weiteren elektrischen Oszillator zu betreiben, der mit einer ganzzahligen Vielfachen der Modulationsfrequenz $f_{mod}$ betrieben wird. Ist die Modulationfrequenz in der Größenordnung der Relaxationsfrequenz des Lasers kann sich die Bandbreite um Größenordnungen erhöhen. Auf diese Weise sind Bandbreiten bis zu 200 GHz möglich. Mit solchen Bandbreiten lassen sich Übertragungssysteme mit 16 Kanälen mit jeweils 20 Mbit/s realisieren.

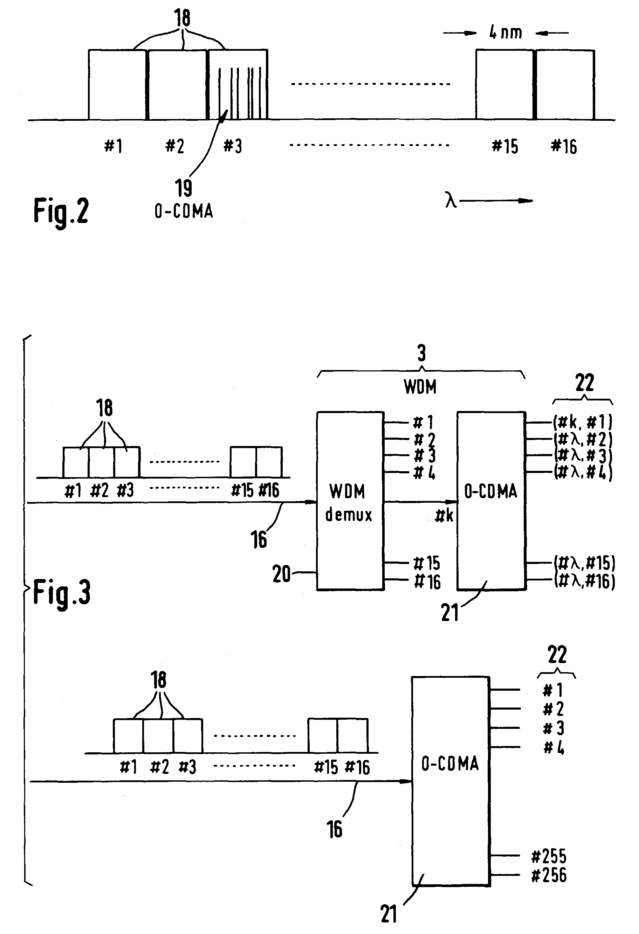

Das vorgeschlagene Übertragungssystem kann durch Kombination mit einer WDM (Wavelength Division Multiplex) Technik eingesetzt werden, um die Anzahl der Kanäle wesentlich zu erhöhen. Dazu wird wie in Fig. 2 gezeigt, die optische Bandbreite, die über der Wellenlänge $\lambda$ dargestellt ist, in einzelne WDM-Fenster 18 eingeteilt. Die optische Bandbreite eines solchen Fensters ist dabei beispielsweise 4 nm. Innerhalb eines WDM-Fensters 18 ist ein schmalbandiges CDMA-Verfahren mit bis zu 16 Kanälen installiert. Auf diese Art und Weise können 256 Kanäle bei einer Bandbreite von 64 nm betrieben werden. Innerhalb eines WDM-Fensters wird jeweils eine einfache optische Demultiplexierung möglich. Zudem ist die Auswahl der Laser für den Sender einfach, da lediglich 16 unterschiedliche zentrale Wellenlängen festgelegt werden müssen. Ist die Laserwellenlänge ungefähr in der Mitte des jeweiligen Fensters, ist der Laser für den Einsatz in einem solchen System bereits geeignet. Auch Temperaturkontrollen entfallen in einem solchen System, da die zentrale Wellenlänge nicht von großer Bedeutung ist, solange sie im jeweiligen Fenster bleibt.

Fig. 3 zeigt das Demultiplexverfahren eines kombinierten WDM-CDMA Übertragungsweges. Im Empfänger 3 werden zunächst die WDM-Fenster entschlüsselt bevor die optische CDMA Analyse im Demultiplexer 21 erfolgt. Das Eingangssignal 16 wird also zunächst im WDM-Demultiplexer 20 zerlegt, durchläuft anschließend den optischen CDMA-Demultiplexer 21 und liegt als Signal einzelner Kanäle 22 vor. In Fig. 3 ist eine weitere Ausführungsform gezeigt, in der die einzelnen WDM-Fenster nicht alle dieselbe optische CDMA Untercodierung enthalten. In diesem Fall werden die optischen Codierungen für 256 Sender unterschiedlich gestaltet und auf unterschiedliche WDM-Fenster verteilt. Für diese Ausführungsform muß das Eingangssignal 16 lediglich einen optischen CDMA Demultiplexer 21 durchlaufen. Am Ausgang liegen dann die Kanäle 1 bis 256 vor.

Die vorgeschlagene Kombination aus WDM und optischem CDMA Verfahren läßt sich auch für bereits beschriebene CDMA Verfahren anwenden, die nicht der oben beschriebenen Ausführungsform genügen. Es ist ein einfacher Systemaufbau, der es erlaubt, besonders im Zugangsbereich eine kostengünstige Multipunkt-zu-Multipunkt-Lösung für bis zu 256 Kanäle aufzubauen.

**Patentansprüche**

1. Optisches Übertragungssystem mit Sendern(1) und Empfängern (3), dadurch gekennzeichnet, daß eine CDMA (Coded Division Multiple Access)-Übertragung mit einer WDM (Wavelength Division Multiplex) - Übertragung kombiniert ist, wobei innerhalb eines WDM-Fensters eine Anzahl N optisch codierter Kanäle übertragen wird.

2. Optisches Übertragungssystem nach Anspruch 1, dadurch gekennzeichnet, daß im Empfänger mindestens ein Demultiplexer (20,21) für CDMA-Signale und/oder WDM-Signale vorhanden sind.

3. Optischer Übertragungssystem zur Übertragung von frequenzcodierten Signalen wobei der wenigstens eine Sender durch Modulation $f_{mod}$ des Injektionsstromes der Laserdiode eine Vielzahl an diskreten äquidistanten Frequenzlinien innerhalb $\Delta f$ erzeugt und der wenigstens eine Empfänger auf die äquidistanten Frequenzlinien einzelner Sender abstimmbar ist, dadurch gekennzeichnet, daß das Datensignal der Bitrate B mit einem Frequenzhub $f_{data}$ grösser als $\Delta f$ des Lasers aufmoduliert wird und im Empfänger ein Signal $B \cdot f_{data}/f_{mod}$ detektierbar ist.

4. Sender (1) für ein Übertragung von frequenzcodierten Signalen bestehend aus einem Dateneingang (16) für elektrische Datensignale, einem Laser (6) und einem Ausgang für optische Signale, dadurch gekennzeichnet, daß der Injektionsstrom des Lasers mindestens mit einer periodischenWellenform $f_{mod}$ eines Oszillators (8) angesteuert wird und die Daten (16) durch eine zusätzliche Veränderung der Mittenfrequenz mit einigen $f_{mod}$.aufmoduliert werden.

5. Sender nach Anspruch 4, dadurch gekennzeichnet, daß der Injektionsstrom des Lasers mit einem Rauschsignal zusätzlich angesteuert wird.

6. Sender nach Anspruch 4, dadurch gekennzeichnet, daß die Datenmodulation durch Erzeugung einer Rampe für den Injektionsstrom des Lasers erfolgt.

7. Sender (1) nach Anspruch 4, dadurch gekennzeichnet, daß die Bandbreite durch eine weitere zusätzliche Modulation des Injektionsstroms mit einem Vielfachen von $f_{mod}$. verbreitert ist.

8. Empfänger (3) für den Empfang von spektral codierten optischen Signalen mit einem optischen Filter dessen freier Spektralbereich mit dem Frequenzabstand der Frequenzlinien eines Senders übereinstimmt, dadurch gekennzeichnet, daß Signale $B \cdot f_{data}/f_{mod}$ an einer Photodiode unterschiedliche Frequenzen für Datenzustände 1/0 erzeugen und diese Frequenzen in einem Mikrowellendetektor auswertbar sind.

9. Empfänger nach Anspruch 8 dadurch gekennzeichnet, daß die Datenmodulation nach der Photodiode mit einem Hoch- oder Bandpaßfilter selektiert und die HF-Modulation nach Durchlaufen eines Hüllkurvendetektors als elektrisches Signal in einem Tiefpaß geglättet wird.

Fig.1
1
DC
8
9
AM, FM,
PM
7
$f_{mod}$
10
6
LD
4
5
2
11
17
16
FSR = $f_{mod}$
12
13
14
15
3

18
4nm
#1
#2
#3
#15
#16
19
O-CDMA
λ
Fig.2

3
WDM
22
18
#1
#2
#3
#4
(#k, #1)
(#λ, #2)
(#λ, #3)
(#λ, #4)
#1 #2 #3
#15 #16
WDM
demux
O-CDMA
#k
16
20
#15
#16
(#λ, #15)
(#λ, #16)
21
22
18
#1
#2
#3
#4
O-CDMA
#1 #2 #3
#15 #16
16
#255
#256
21
Fig.3